# FASCICULE DE BREVET EUROPEEN

(11) **EP 4 237 334 B1**
(45) Date de publication et mention de la délivrance du brevet: **01.01.2025**
(21) Numéro de dépôt: 21810676.3
(22) Date de dépôt: 02.11.2021
(51) Int. Cl.: B64D 29/06, B64D 29/08, B64D 27/40

(54) **NACELLE POUR ENSEMBLE PROPULSIF D'AÉRONEF, COMPRENANT UNE BIELLE DE SÉCURITÉ FORMANT RENFORT STRUCTURAL**
GONDEL FÜR EINE FLUGZEUGANTRIEBSEINHEIT MIT EINER SICHERHEITSSTANGE ZUR FORMUNG EINER STRUKTURELLEN VERSTÄRKUNG
NACELLE FOR AN AIRCRAFT PROPULSION UNIT, COMPRISING A SAFETY ROD FORMING A STRUCTURAL REINFORCEMENT

(30) Priorité: 02.11.2020 FR 2011205
(43) Date de publication de la demande: 06.09.2023
(73) Titulaire: Safran Nacelles, 76700 Gonfreville-l'Orcher (FR)
(72) Inventeur: REBOUL, Pierre-Alain, 77550 MOISSY-CRAMAYEL (FR); KIOUA, Hazem, 77550 MOISSY-CRAMAYEL (FR); MARLAY, Thomas, 77550 MOISSY-CRAMAYEL (FR); SCHMITTER, Ophélie, 77550 MOISSY-CRAMAYEL (FR)
(74) Mandataire: Brevalex
(86) Numéro de dépôt international: PCT/FR2021/051916
(87) Numéro de publication internationale: WO 2022/090676

(56) Documents cités:
- FR-A1- 2 873 988
- FR-A1- 2 920 177
- FR-A1- 3 025 556
- FR-A1- 3 040 044
- FR-A1- 3 075 176

## Description

### Domaine technique

L'invention se rapporte au domaine des ensembles propulsifs pour aéronefs.

### État de la technique antérieure

Un ensemble propulsif d'aéronef nécessite d'être régulièrement inspecté, entretenu et/ou réparé.

A cet effet, un ensemble propulsif conventionnel comprend des capots de soufflante articulés sur des charnières permettant de les placer dans une position ouverte dans laquelle ils dégagent un espace d'accès au moteur.

Des bielles de sécurité, connues sous l'acronyme « HOR » pour « Hold Open Rod » en anglais, sont généralement prévues pour maintenir les capots en position ouverte, par exemple tel que décrit dans le document FR 3 025 556 A1.

De telles bielles de sécurité augmentent la masse de l'ensemble propulsif.

Le document FR 3 075 176 A1 divulgue une nacelle pour ensemble propulsif d'aéronef, comprenant un capot mobile entre une position fermée et une position ouverte, et une bielle déplaçable configurée pour remplir une fonction de renfort structural en vol et une fonction de maintien du capot en position ouverte lors d'une maintenance.

### Exposé de l'invention

Un but de l'invention est de procurer une nacelle pour ensemble propulsif d'aéronef permettant de maintenir des capots de la nacelle en position ouverte tout en réduisant la masse constituée par des éléments inopérants en situation de vol.

A cet effet, l'invention a pour objet une nacelle pour ensemble propulsif d'aéronef, comprenant les caractéristiques de la revendication 1.

La bielle constitue ainsi un moyen de maintien du capot en position ouverte, c'est-à-dire une bielle de sécurité, permettant d'améliorer la tenue structurale de la nacelle et la répartition des charges au sein de l'ensemble propulsif et de l'aéronef en situation de vol. Par rapport à une nacelle conventionnelle, la bielle de sécurité de l'invention présente par conséquent une masse utile en vol.

Le capot comprend des moyens de liaison configurés pour coopérer avec la bielle en position de maintenance, la bielle en position de vol étant désolidarisée de ces moyens de liaison.

Dans la présente description, il est considéré que le premier composant est distinct du deuxième composant.

Comme indiqué ci-dessus, le deuxième composant peut être un composant de la nacelle ou, alternativement, un composant formé par une autre partie de l'aéronef, c'est-à-dire un composant n'appartenant pas à la nacelle.

Dans un mode de réalisation, la nacelle comprend une entrée d'air, une section arrière d'éjection de gaz et un berceau, le berceau s'étendant longitudinalement entre l'entrée d'air et la section arrière et supportant l'entrée d'air et/ou la section arrière, le berceau comprenant des moyens d'attache configurés pour coopérer avec la bielle en position de vol, la bielle en position de maintenance étant désolidarisée de ces moyens d'attache.

Le premier composant est par exemple formé par une entrée d'air ou par une section arrière d'éjection de gaz de la nacelle.

L'invention concerne aussi un ensemble propulsif pour aéronef comprenant une turbomachine et une nacelle telle que définie ci-dessus.

Dans un mode de réalisation, la bielle en position de maintenance est fixée à la turbomachine.

L'invention concerne aussi un aéronef comprenant un tel ensemble propulsif ou une telle nacelle.

Dans un mode de réalisation, l'aéronef comprend un élément de voilure ou de fuselage ou d'empennage formant ledit deuxième composant.

Selon un autre aspect, l'invention se rapporte aussi à un procédé d'inspection et/ou de maintenance d'un ensemble propulsif tel que défini ci-dessus.

Ce procédé comprend une étape de déplacement du capot de la position fermée à la position ouverte et une étape de déplacement de la bielle de la position de vol à la position de maintenance.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique d'un ensemble propulsif d'aéronef ;
[Fig. 2] est une vue schématique d'un ensemble propulsif monté sous une aile d'aéronef ;
[Fig. 3] est une vue schématique de deux ensembles propulsifs montés latéralement en partie arrière d'un fuselage d'aéronef ;
[Fig. 4] est une vue schématique d'un ensemble propulsif montés en partie arrière d'un fuselage d'aéronef, sous un empennage de cet aéronef ;
[Fig. 5] est une vue schématique d'un ensemble propulsif comprenant une turbomachine et une nacelle qui sont supportées indépendamment l'une de l'autre par une structure de support ;
[Fig. 6] est une vue schématique d'un berceau de support de nacelle pour un ensemble propulsif présentant une architecture conforme à la figure 5 ;
[Fig. 7] est une vue schématique du berceau de la figure 6 recouvert de peaux externes ;
[Fig. 8] est une vue schématique d'une ossature d'aile d'aéronef sous laquelle sont suspendus le berceau de la figure 6 et une turbomachine conformément à l'architecture de la figure 5 ;
[Fig. 9] est une vue schématique d'un ensemble propulsif comprenant le berceau de la figure 6 et deux capots de soufflante dans une position fermée ;
[Fig. 10] est une vue schématique de l'ensemble propulsif de la figure 9, les capots de soufflante étant dans une position ouverte ;
[Fig. 11] est une vue schématique d'un ensemble propulsif présentant une architecture semblable à celle de la figure 5, l'ensemble propulsif comprenant des bielles dans une position de vol dans laquelle elles assurent une fonction de renfort structural de la nacelle ;
[Fig. 12] est une vue schématique de l'ensemble propulsif de la figure 11, les bielles étant dans une position de maintenance dans laquelle elles maintiennent un capot de soufflante dans une position ouverte ;
[Fig. 13] est une vue schématique de l'ensemble propulsif de la figure 10, comprenant une bielle en position de maintenance reliées au berceau et à l'un des capots ;
[Fig. 14] est une vue schématique de l'ensemble propulsif de la figure 10, comprenant une bielle en position de maintenance reliées à une turbomachine et à l'un des capots ;
[Fig. 15] est une vue schématique d'un ensemble propulsif comprenant des bielles en position de vol.

### Description détaillée de modes de réalisation

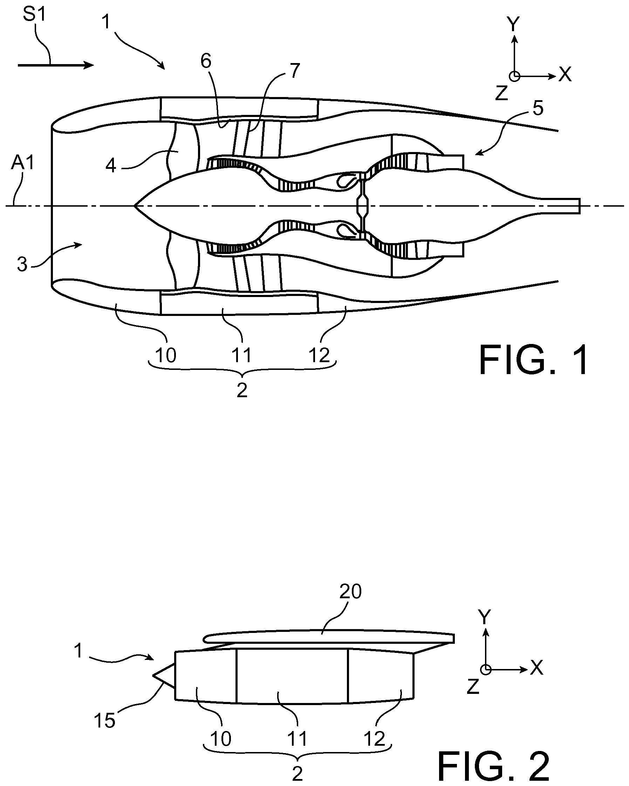

Les figures 1 à 15 comprennent un référentiel X, Y et Z définissant respectivement des directions axiale (ou longitudinale), verticale et latérale orthogonales entre elles.

Il est représenté sur la figure 1 un ensemble propulsif 1 pour aéronef, présentant un axe central longitudinal A1 parallèle à la direction axiale X.

L'ensemble propulsif 1 comprend une nacelle 2 et une turbomachine 3.

Dans cet exemple, la turbomachine 3 est un turboréacteur à double flux comprenant, de manière connue en soi, une soufflante 4, un générateur de gaz 5 et un carter externe 6 relié au générateur de gaz 5 par des bras structuraux 7.

L'axe central longitudinal A1 forme un axe de rotation d'un rotor de la turbomachine 3.

Le carter externe 6 de la turbomachine 3 s'étend axialement vers l'avant de l'ensemble propulsif 1 de manière à entourer la soufflante 4.

Dans l'ensemble de la description, les termes « avant » et « arrière » sont définis relativement à un sens S1 d'écoulement de gaz à travers l'ensemble propulsif 1 selon la direction axiale X.

De manière connue en soi, la nacelle 2 comprend, de l'avant vers l'arrière, une section avant 10 formant une entrée d'air, une section intermédiaire 11 comprenant des capots de soufflante (voir ci-dessous), et une section arrière 12 d'éjection de gaz.

Dans cet exemple, la section arrière 12 est une virole fixe. Dans un autre mode de réalisation, la section arrière 12 comprend un inverseur de poussée (non représenté).

Les figures 2 à 4 illustrent différentes configurations conventionnelles de montage d'un tel ensemble propulsif 1.

La figure 2 montre un ensemble propulsif 1 monté verticalement sous une aile 20 d'un aéronef.

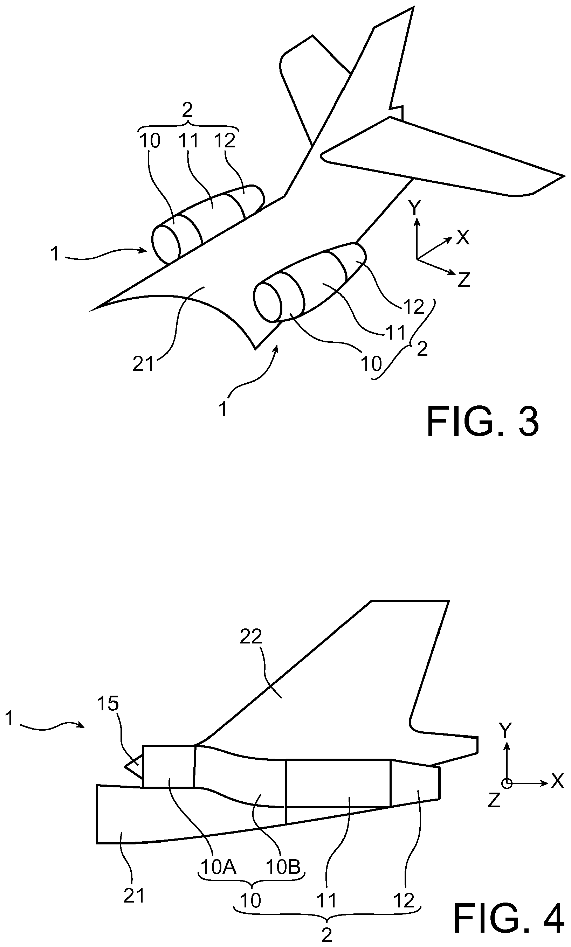

La figure 3 montre deux ensembles propulsifs 1 montés sur un fuselage 21 d'un aéronef, latéralement et en partie arrière du fuselage 21.

La figure 4 montre un ensemble propulsif 1 monté sur un fuselage 21 d'un aéronef, dans le prolongement du fuselage 21 selon la direction longitudinale X et s'étendant verticalement sous un empennage 22 de l'aéronef.

Les ensembles propulsifs 1 illustrés sur les figures 2 à 4 sont dans ces exemples similaires à celui de la figure 1.

Dans la configuration de la figure 4, l'entrée d'air 10 comprend un tronçon 10A de captation d'air et un tronçon 10B en forme de « S » reliant l'un à l'autre le tronçon 10A et la section intermédiaire 11 de la nacelle 2.

Dans chacune des configurations des figures 2 et 4, l'ensemble propulsif 1 comprend en outre un cône d'entrée 15 permettant de ralentir le flux d'air pénétrant dans l'entrée d'air 10.

La nacelle 2 et la turbomachine 3 de l'ensemble propulsif 1 sont supportées par une structure de support décrite plus en détails ci-dessous.

Dans la configuration de la figure 2, la structure de support forme une partie d'une ossature de l'aile 20.

Dans la configuration de la figure 3, la structure de support forme une partie du fuselage 21.

Dans la configuration de la figure 4, la structure de support forme une partie de l'empennage 22.

L'invention est applicable à chacune des configurations des figures 2 à 4 et à des variantes de ces configurations. Par exemple, l'invention peut aussi être mise en oeuvre dans un ensemble propulsif 1 dépourvu de cône d'entrée et monté selon la configuration de la figure 2 ou 4, ou encore à un ensemble propulsif 1 comportant un cône d'entrée et monté selon la configuration de la figure 3.

De plus, l'invention s'applique aussi à un ensemble propulsif dont la turbomachine est différente de celle illustrée à la figure 1. De manière non limitative, la turbomachine peut être un turboréacteur à simple ou à double flux et comprenant ou non une postcombustion.

Par convention, il est considéré dans la présente description que la structure de support appartient à l'ensemble propulsif 1.

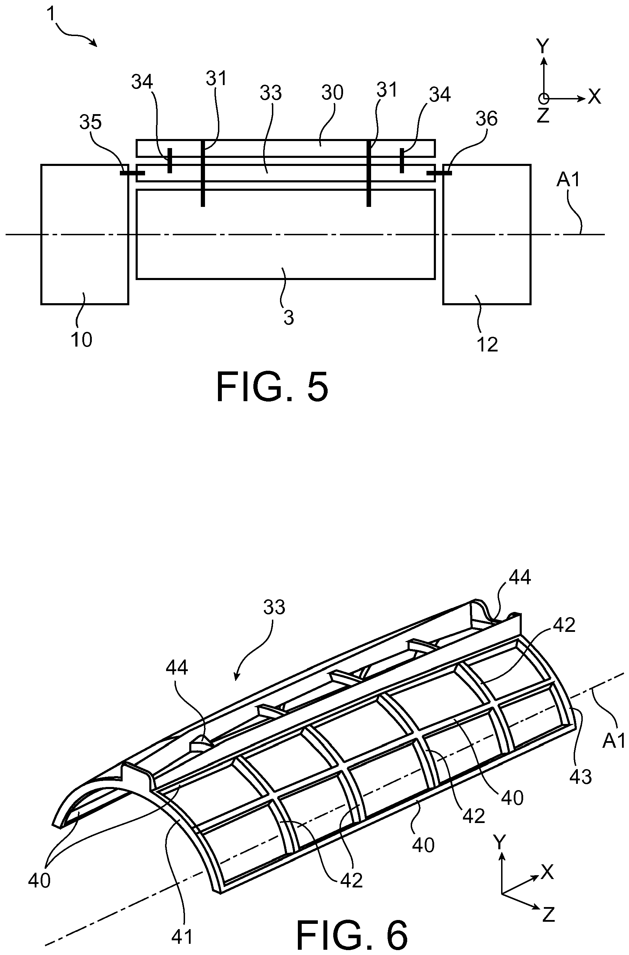

L'invention présente un intérêt particulier pour un ensemble propulsif 1 ayant une architecture telle qu'illustrée sur la figure 5. Toutefois, l'invention peut être mise en oeuvre au sein d'un ensemble propulsif présentant une architecture conventionnelle ou différente de celle de la figure 5 (voir plus loin ci-dessous).

L'ensemble propulsif 1 de la figure 5 comprend une structure de support 30 qui forme dans cet exemple une partie d'ossature d'aile 20, selon configuration de la figure 2.

La description qui suit s'applique par analogie à chacune des configurations des figures 3 et 4 et plus généralement à toute configuration identique ou similaire à l'une quelconque des configurations des figures 2 à 4.

En référence à la figure 5, la turbomachine 3 est reliée à la structure de support 30 par des premiers moyens de liaison 31.

Dans cet exemple, les premiers moyens de liaison 31 comprennent des bras de suspension configurés pour supporter la turbomachine 3.

L'ensemble propulsif 1 de la figure 5 comprend par ailleurs une structure de support intermédiaire 33 fixée à la structure de support 30 par des organes de fixation 34.

La structure de support intermédiaire 33 forme dans cet exemple une partie de la section intermédiaire 11 de la nacelle 2 au sens où elle s'étend axialement entre l'entrée d'air 10 et la section arrière 12 de la nacelle 2.

Dans cet exemple, l'entrée d'air 10 et la section arrière 12 sont chacune reliées à la structure de support intermédiaire 33 par des moyens de liaison 35 et 36, respectivement.

La structure de support intermédiaire 33 et les moyens de liaison 35 et 36 forment des deuxièmes moyens de liaison, distincts des premiers moyens de liaison 31.

Cette architecture permet à la structure de support 30 de supporter d'une part la turbomachine 3 via les premiers moyens de liaison 31 et d'autre part l'entrée d'air 10 et la section arrière 12 de la nacelle 2 via les deuxièmes moyens de liaison.

Autrement dit, la turbomachine 3 d'une part et l'entrée d'air 10 et la section arrière 12 de la nacelle 2 d'autre part sont supportées par la structure de support 30 de manière indépendante.

Par comparaison avec un ensemble propulsif conventionnel dans lequel l'entrée d'air et la section arrière de la nacelle sont supportées par la turbomachine, l'architecture de l'ensemble propulsif de la figure 5 permet de réduire la masse de la turbomachine 3, celle-ci pouvant dès lors être dépourvue de brides de fixation de l'entrée d'air 10 et de la section arrière 12, et permet d'éviter d'engendrer des charges importantes sur la turbomachine 3 et d'affecter ainsi son comportement dynamique.

Bien entendu, les deuxièmes moyens de liaison peuvent être dépourvus d'une telle structure de support intermédiaire 33 et l'entrée d'air 10 et/ou la section arrière 12 de la nacelle 2 peuvent être directement fixées sur la structure de support 30.

Peuvent ainsi être distingués, notamment, les différentes catégories de modes de réalisation suivantes. Selon une première catégorie de modes de réalisation, l'entrée d'air 10 et la section arrière 12 sont reliées à la structure de support intermédiaire 33. Selon une deuxième catégorie de modes de réalisation, l'entrée d'air 10 est reliée à la structure de support intermédiaire 33 tandis que la section arrière 12 est directement reliée à la structure de support 30. Selon une troisième catégorie de modes de réalisation, la section arrière 12 est reliée à la structure de support intermédiaire 33 tandis que l'entrée d'air 10 est directement reliée à la structure de support 30. Selon une quatrième catégorie de modes de réalisation, l'entrée d'air 10 et la section arrière 12 sont directement reliée à la structure de support 30.

La structure de support intermédiaire 33 de la figure 5 peut présenter toute géométrie adaptée au support de l'entrée d'air 10 et/ou de la section arrière 12. Par exemple, la structure de support intermédiaire 33 peut former une poutre, un caisson, un berceau, une structure en treillis ou toute autre structure capable de relier l'entrée d'air 10 et/ou la section arrière 12 à la structure de support 30.

Dans un mode de réalisation, la structure de support intermédiaire 33 forme un berceau tel qu'illustré à la figure 6.

Le berceau 33 comprend des longerons 40 et des tronçons d'anneau 41, 42 et 43 reliés les uns aux autres de manière à former une structure en treillis.

Une telle structure est tout à la fois robuste et peu massive.

Dans cet exemple, le berceau 33 comprend six longerons 40 s'étendant parallèlement à la direction axiale X et étant circonférentiellement espacées les uns des autres, ainsi que six tronçons d'anneau 41, 42 et 43 espacés les uns des autres le long de la direction axiale X.

Le berceau de la figure 6 présente un plan de symétrie Z-X passant par l'axe central longitudinal A1, trois desdits longerons 40 s'étendant d'un côté de ce plan de symétrie et les trois autres longerons 40 s'étendant de l'autre côté de ce plan de symétrie.

Le berceau 33 comprend aussi une structure d'accroche 44 configurée pour coopérer avec lesdits organes de fixation 34 de manière à fixer le berceau 33 sur la structure de support 30 (voir figures 5 et 6).

Le tronçon d'anneau 41 est situé à l'une des extrémités axiales du berceau 33 et forme un cadre avant. Le tronçon d'anneau 43 est situé à l'autre extrémité axiale du berceau 33 et forme un cadre arrière. Les tronçons d'anneau 42 s'étendent axialement entre le cadre avant 41 et le cadre arrière 43.

Lorsque le berceau est fixé à la structure de support 30 de l'ensemble propulsif 1, les tronçons d'anneau 41, 42 et 43 et par suite le berceau 33 dans son ensemble s'étendent circonférentiellement autour de l'axe central longitudinal A1.

Dans cet exemple, le berceau 33 présente une dimension circonférentielle inférieure à 180°, cette dimension étant en l'occurrence définie par la dimension circonférentielle de chacun des tronçons d'anneau 41, 42 et 43.

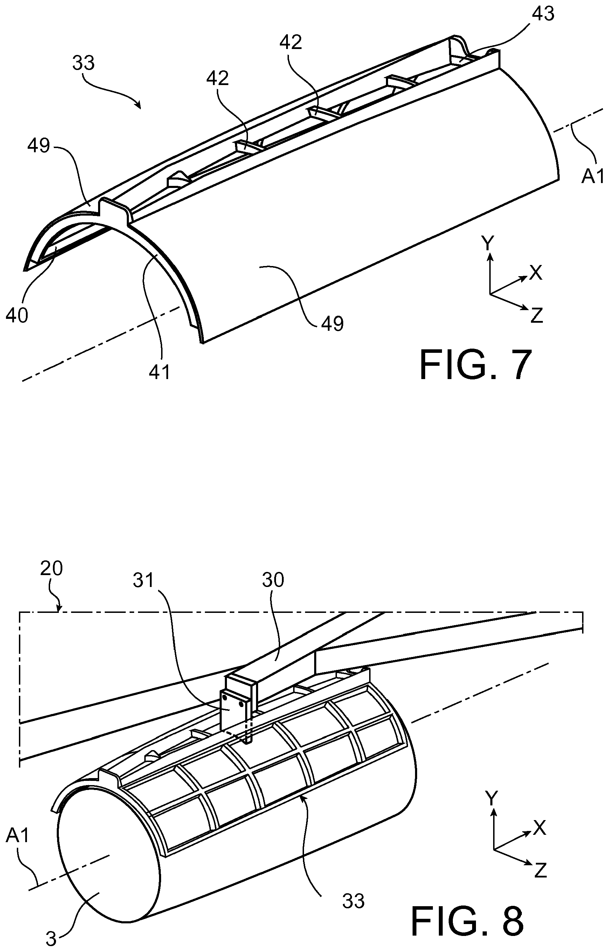

La figure 7 montre le berceau 33 partiellement recouvert de peaux externes 49 formant un carénage.

En référence aux figures 5 et 6, l'entrée d'air 10 de la nacelle 2 est dans cet exemple montée en porte-à-faux sur le berceau 33, en étant reliée au cadre avant 41 du berceau 33 par les moyens de liaison 35.

De manière similaire, la section arrière 12 de la nacelle 2 est dans cet exemple montée en porte-à-faux sur le berceau 33, en étant reliée au cadre arrière 43 du berceau 33 par les moyens de liaison 36.

Dans ce mode de réalisation, l'entrée d'air 10 et la section arrière 12 de la nacelle 2 sont en appui axial, ou susceptibles de venir en appui axial, respectivement sur le cadre avant 41 et le cadre arrière 43 du berceau 33, c'est-à-dire sur un secteur circonférentiel inférieur à 180°.

Dans d'autres modes de réalisation non représentés, le cadre avant 41 et/ou le cadre arrière 43 du berceau 33 sont annulaires de sorte que l'entrée d'air 10 et/ou la section arrière 12 soient montées sur toute leur circonférence en appui axial sur le berceau 33.

Dans cet exemple, les bras 31 de suspension de la turbomachine 3 traversent des ouvertures formées par le berceau 33 (voir figures 5, 6 et 8), c'est-à-dire des ouvertures délimitées axialement par deux tronçons d'anneau respectifs et par deux longerons respectifs du berceau 33.

Le concept consistant à faire traverser la structure de support intermédiaire 33, et plus généralement les deuxièmes moyens de liaison, par les premiers moyens de liaison 31 est aussi applicable à une structure de support intermédiaire présentant une géométrie différente de celle du berceau de la figure 6. Par exemple, dans un mode de réalisation dans lequel la structure de support intermédiaire est une poutre, des ouvertures peuvent être ménagées dans la poutre de sorte que les premiers moyens de liaison puissent s'étendre à travers ces ouvertures (non représenté).

La figure 8 montre une partie d'aéronef comportant un ensemble propulsif 1 présentant l'architecture de la figure 5 et comprenant en guise de structure de support intermédiaire 33 le berceau de la figure 6.

Plus précisément, la figure 8 montre une ossature 30 d'une aile 20 d'aéronef, le berceau 33 et la turbomachine 3 fixée à l'ossature 30 par les bras de suspension 31 (un seul bras étant visible sur cette figure). Les organes 34 de fixation du berceau 33 sur l'ossature 30 ne sont pas visibles sur la figure 8.

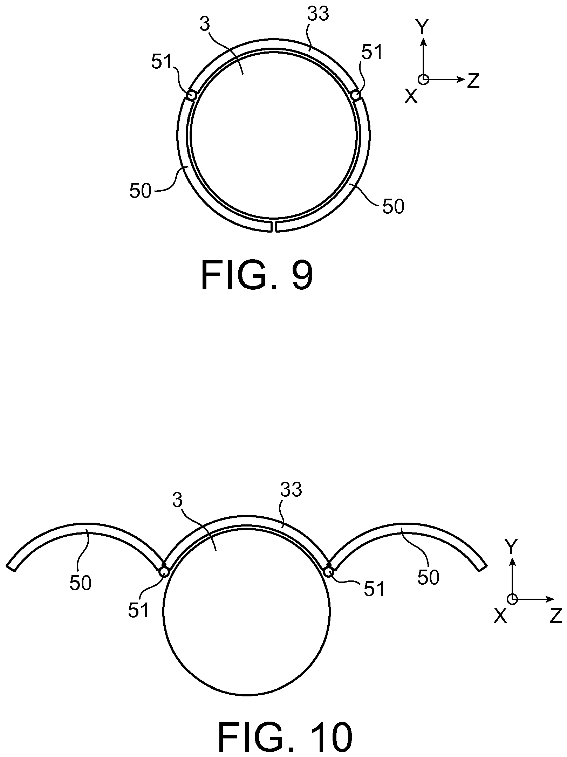

Les figures 9 et 10 montrent schématiquement des capots 50 de soufflante qui sont chacun reliés à une structure d'un ensemble propulsif 1 selon une liaison pivot 51 leur permettant d'être déplacés entre une position fermée (figure 9) et une position ouverte (figure 10).

Dans cet exemple, l'ensemble propulsif 1 présente une architecture telle que représentée sur la figure 5 et la structure à laquelle sont reliés les capots 50 est le berceau 33 de la figure 6. Dans des modes de réalisation alternatifs, les capots 50 sont reliés à la structure de support 30 d'un ensemble propulsif 1 tel que celui de la figure 5 ou à une autre structure d'un ensemble propulsif ou d'un aéronef présentant une architecture qui peut être similaire ou différente de celle de la figure 5. La description qui suit s'applique par analogie à ces modes de réalisation alternatifs.

En position fermée (figure 9), les capots 50 recouvrent la turbomachine 3 de manière à constituer un carénage externe de la section intermédiaire 11 de la nacelle 2.

En position ouverte (figure 10), les capots 50 libèrent un espace d'accès à la turbomachine 3.

De manière connue en soi, chacun des capots 50 est déplaçable entre les positions fermée et ouverte, de préférence sous l'action d'un vérin (non représenté), en rotation autour d'un axe défini par la liaison pivot 51 correspondante.

L'invention se rapporte plus spécifiquement à un système comprenant une ou plusieurs bielles 55 prévues pour remplir à la fois une fonction de renfort structural lorsque l'ensemble propulsif 1 est dans une configuration de vol, dans laquelle les capots 50 sont en position fermée, et une fonction de maintien des capots 50 en position ouverte lorsque l'ensemble propulsif 1 est dans une configuration de maintenance.

L'ensemble propulsif 1 des figures 9 et suivantes comprend deux demi-parties symétriques l'une par rapport à l'autre et s'étendant de part et d'autre d'un plan longitudinal médian qui est parallèle à un plan défini par les directions Y et X, c'est-à-dire en l'occurrence un plan vertical, passant par l'axe central longitudinal A1 de l'ensemble propulsif 1.

Dans un mode de réalisation non représenté, les deux demi-parties ne sont pas symétriques l'une par rapport à l'autre.

Chacune de ces demi-parties comprend l'un respectif des capots 50.

La description qui suit a trait à l'une de ces demi-parties - et se réfère par conséquent à un seul des deux capots 50 - et s'applique par analogie à l'autre demi-partie de l'ensemble propulsif 1.

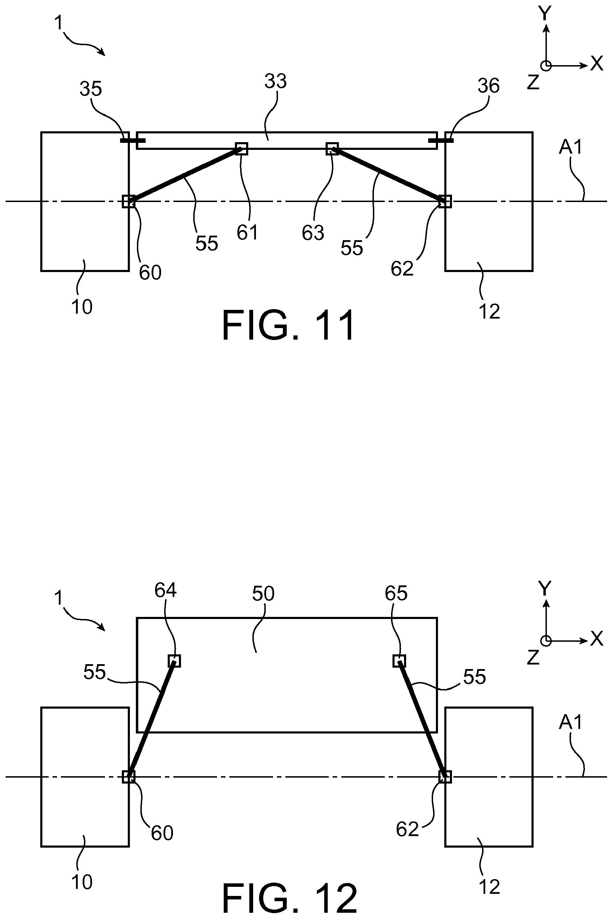

Dans le mode de réalisation des figures 11 et 12, l'ensemble propulsif 1 présente une architecture telle qu'illustrée sur la figure 5.

Cet ensemble propulsif 1 comprend deux bielles 55.

Sur la figure 11, les bielles 55 sont dans une position de vol dans laquelle elles sont configurées pour remplir une fonction de renfort structural.

L'une de ces bielles 55, appelée « bielle avant » (à gauche sur la figure 11), comprend une première extrémité reliée à l'entrée d'air 10 par un moyen de liaison 60 et une deuxième extrémité reliée à la structure de support intermédiaire 33, dans cet exemple le berceau de la figure 6, par un moyen de liaison 61 aussi appelé « moyen d'attache ». L'autre bielle 55, appelée « bielle arrière » (à droite sur la figure 11), comprend une première extrémité reliée à la section arrière 12 par un moyen de liaison 62 et une deuxième extrémité reliée au berceau 33 par un moyen de liaison 63 aussi appelé « moyen d'attache ».

Les bielles 55 en position de vol s'étendent obliquement par rapport aux directions longitudinale X et verticale Y de sorte que la bielle avant puisse transmettre des efforts entre l'entrée d'air 10 et le berceau 33 et la bielle arrière entre la section arrière 12 et le berceau 33.

Les bielles 55 sont déplaçables entre la position de vol de la figure 11 et une position de maintenance illustrée sur la figure 12.

Dans cet exemple, le moyen de liaison 60 reliant l'une à l'autre la bielle avant 55 et l'entrée d'air 10 forme une liaison pivot et le moyen de liaison 61 forme une liaison détachable permettant de désolidariser la bielle avant 55 et le berceau 33 l'un de l'autre - le berceau 33 est visible sur la figure 11 mais non sur la figure 12 ; à l'inverse, le capot 50 est visible sur la figure 12 mais non sur la figure 11.

De même, le moyen de liaison 62 reliant l'une à l'autre la bielle arrière 55 et la section arrière 10 forme une liaison pivot et le moyen de liaison 63 forme une liaison détachable permettant de désolidariser la bielle arrière 55 et le berceau 33 l'un de l'autre.

Dans un mode de réalisation, chacun des moyens de liaison 60 et 62 comprend une chape (non représentée) fixée sur l'entrée d'air 10 ou la section arrière 12, respectivement, les bielles 55 comprenant un axe (non représenté) configuré pour coopérer avec la chape correspondante pour former ladite liaison pivot.

Chacun des moyens de liaison 61 et 63 comprend dans cet exemple au moins une partie d'un mécanisme à broche à billes connu sous la dénomination anglo-saxonne « quick-release pin » et permettant de relier/désolidariser rapidement chacune des bielles 55 et le berceau 33 l'un par rapport à l'autre.

Bien entendu, les moyens de liaison 61 et 63 peuvent comprendre tout autre mécanisme de verrouillage-déverrouillage, y compris un mécanisme de type vis-écrou si la durée des interventions de maintenance est peu contraignante dans les applications envisagées.

Pour passer de la position de vol (figure 11) à la position de maintenance (figure 12), les bielles 55 sont manuellement désolidarisées du berceau 33 puis déplacées par rapport au berceau 33 selon leur liaison pivot 60 ou 62 respective.

En référence à la figure 12, le capot 50 comprend deux moyens de liaison 64 et 65 configurés chacun pour coopérer avec la deuxième extrémité de l'une respective des bielles 55 lorsque celles-ci sont en position de maintenance.

Les moyens de liaison 64 et 65 sont similaires aux moyens de liaison 61 et 63 et comprennent donc, dans cet exemple, au moins une partie d'un mécanisme à broche à billes permettant de relier/désolidariser rapidement chacune des bielles 55 et le capot 50 l'un par rapport à l'autre.

Le mécanisme à broche à billes peut bien entendu être remplacé par un autre moyen de verrouillage (non représenté).

Les bielles 55 en position de maintenance sont configurées pour remplir une fonction de maintien du capot 50 en position ouverte.

Pour passer la position de maintenance (figure 12) à la position de vol (figure 11), les bielles 55 sont manuellement désolidarisées du capot 50 puis déplacées par rapport au berceau 33 selon leur liaison pivot 60 ou 62 respective.

Par conséquent, les bielles 55 en position de vol sont désolidarisées du capot 50 et coopèrent avec l'entrée d'air 10, la section arrière 12 et le berceau 33 tandis que, en position de maintenance, elles sont désolidarisées du berceau 33 et coopèrent avec l'entrée d'air 10, la section arrière 12 et le capot 50.

Afin de réaliser une opération d'inspection et/ou de maintenance de l'ensemble propulsif 1 en partant d'une configuration de vol dans laquelle le capot 50 est en position fermée et dans laquelle les bielles 55 sont en position de vol, le capot 50 est déplacé de la position fermée à la position ouverte puis les bielles 55 sont déplacées de la position de vol à la position de maintenance.

Inversement, pour replacer l'ensemble propulsif 1 en configuration de vol, les bielles 55 sont déplacées de la position de maintenance à la position de vol puis le capot 50 est déplacé de la position ouverte à la position fermée.

L'invention englobe de nombreuses variantes ou alternatives aux modes de réalisation qui viennent d'être décrits.

Par exemple, la liaison pivot formée par les moyens de liaison 60 et 62 peut être remplacée par une liaison rotule.

Par ailleurs, l'une ou l'autre ou les deux bielles 55 peuvent être détachables des deux côtés.

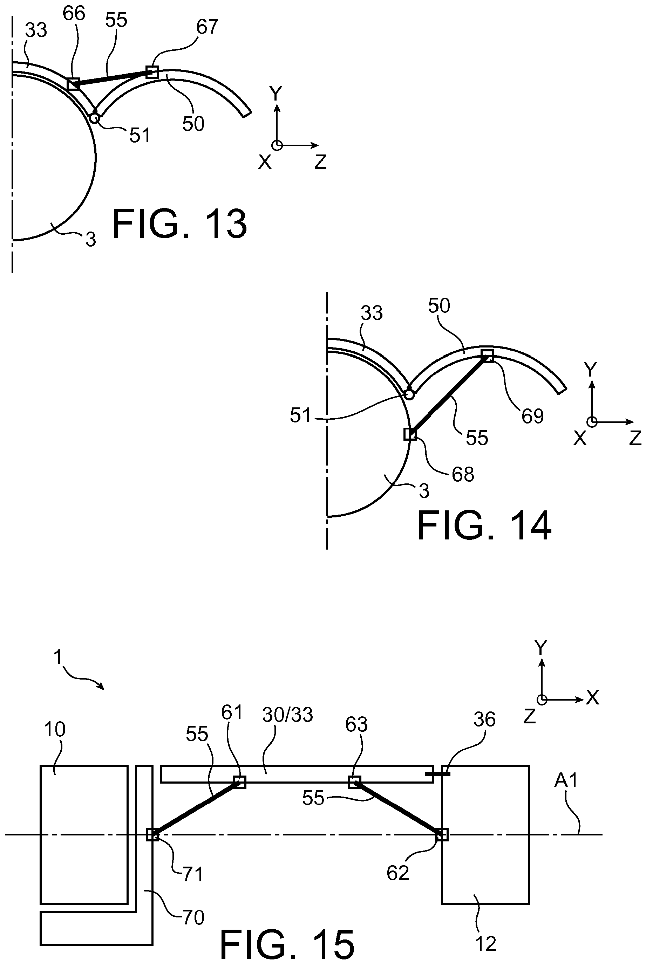

Ainsi, les moyens de liaison 60 et 61 de la figure 11 peuvent tous deux être de type détachable et, en référence à la figure 13, la structure de support intermédiaire 33 et le capot 50 peuvent chacun comprendre un moyen de liaison 66 et 67, respectivement, détachable correspondant.

Dans cet exemple, en position de vol (figure 11), la bielle avant 55 coopère avec l'entrée d'air 10 et le berceau 33 via les moyens de liaison 60 et 61, respectivement, et est désolidarisée du capot 50. En position de maintenance (figure 13), la bielle avant 55 est désolidarisée de l'entrée d'air 10 et coopère avec le berceau 33 et le capot 50 via les moyens de liaison 66 et 67, respectivement, de manière à maintenir le capot en position ouverte.

Dans l'exemple de la figure 14, la turbomachine 3 et le capot 50 comprennent chacun un moyen de liaison 66 et 69, respectivement, de type détachable de sorte que, en position de maintenance, la bielle avant 55 est désolidarisée de l'entrée d'air 10 et coopère avec la turbomachine 3 et le capot 50 via les moyens de liaison 68 et 69, respectivement, de manière à maintenir le capot 50 en position ouverte.

Ce qui vient d'être décrit en référence aux figures 13 et 14 peut s'appliquer de la même manière à la bielle arrière 55 de la figure 11.

Les bielles 55 présentent toute géométrie adaptée à l'architecture de l'ensemble propulsif 1, par exemple une forme droite ou courbée de manière à épouser par exemple des contours de la turbomachine 3.

Les bielles 55 peuvent être télescopiques afin de présenter une longueur différente en position de vol et en position de maintenance.

Le nombre de bielles 55 peut être adapté en fonction des dimensions et de l'architecture de l'ensemble propulsif 1 ainsi que des charges effectives auxquelles elles doivent être soumises.

Par exemple, lorsque la section arrière 12 ne comprend pas d'inverseur de poussée, seule la bielle avant peut être mise en oeuvre. En effet, l'absence d'inverseur permet de réduire les contraintes mécaniques et, dans cet exemple, de se passer de la bielle arrière.

Les modes de réalisation décrits ci-dessus en référence aux figures 9 à 14 sont particulièrement adaptés à une configuration d'ensemble propulsif 1 telle qu'illustrée sur les figures 2 et 3. Ils peuvent aussi être mis en oeuvre dans une configuration telle qu'illustrée sur la figure 4.

La figure 15 montre un autre type d'architecture d'ensemble propulsif 1 particulièrement adaptée, mais nullement limitée, à un montage conforme à la figure 4.

Par comparaison avec la figure 11, l'ensemble propulsif 1 de la figure 15 comprend une bielle avant 55 coopérant en position de vol non pas avec l'entrée d'air 10 mais avec une structure 70 formant dans cet exemple une partie du fuselage 21 de l'aéronef. La structure 70 comprend un moyen de liaison 71 similaire au moyen de liaison 60 de la figure 11.

Dans tous les exemples décrits ci-dessus, la ou les bielles 55 peuvent coopérer en position de vol non pas avec la structure de support intermédiaire 33 d'une architecture conforme à la figure 5 mais avec une structure de support 30 pouvant former un élément de voilure ou de fuselage ou d'empennage de l'aéronef.

Par exemple, dans le cas particulier de la figure 15, les moyens de liaison 61 et 63 peuvent être agencés de sorte que les bielles 55 en position de vol coopèrent avec une structure de support 30 formant une partie de l'empennage 22 de l'aéronef.

## Revendications

1. Nacelle (2) pour ensemble propulsif (1) d'aéronef, comprenant au moins un capot (50) mobile entre une position fermée et une position ouverte, telle qu'elle comprend au moins une bielle (55) déplaçable configurée pour remplir :
- une première fonction de renfort structural lorsqu'elle est placée dans une position de vol, la bielle (55) en position de vol étant configurée pour transmettre des efforts entre un premier composant (10, 12) de la nacelle (2) et un deuxième composant (33, 20, 21, 22) de la nacelle (2) ou formé par une autre partie de l'aéronef, et
- une deuxième fonction de maintien lorsqu'elle est placée dans une position de maintenance, la bielle en position de maintenance étant apte à maintenir le capot (50) en position ouverte et telle
que le capot (50) comprend des moyens de liaison (64, 65, 67, 69) configurés pour coopérer avec la bielle (55) en position de maintenance, la bielle (55) en position de vol étant désolidarisée de ces moyens de liaison (64, 65, 67, 69).

2. Nacelle (2) selon la revendication 1, comprenant une entrée d'air (10), une section arrière (12) d'éjection de gaz et un berceau (33), le berceau (33) s'étendant longitudinalement entre l'entrée d'air (10) et la section arrière (12) et supportant l'entrée d'air (10) et/ou la section arrière (12), le berceau (33) comprenant des moyens d'attache (61, 63) configurés pour coopérer avec la bielle (55) en position de vol, la bielle (55) en position de maintenance étant désolidarisée de ces moyens d'attache (61, 63).

3. Nacelle (2) selon l'une quelconque des revendications 1 ou 2, dans laquelle le premier composant est formé par une entrée d'air (10) ou par une section arrière (12) d'éjection de gaz de la nacelle (2).

4. Ensemble propulsif (1) pour aéronef, comprenant une turbomachine (3) et une nacelle (2) selon l'une quelconque des revendications 1 à 3.

5. Ensemble propulsif (1) selon la revendication 4, dans lequel la bielle (55) en position de maintenance est fixée à la turbomachine (3).

6. Aéronef comprenant un ensemble propulsif (1) selon la revendication 4 ou 5.

7. Aéronef selon la revendication 6, comprenant un élément de voilure (20) ou de fuselage (21) ou d'empennage (22) formant ledit deuxième composant.

8. Procédé d'inspection et/ou de maintenance d'un ensemble propulsif (1) selon la revendication 4 ou 5, comprenant une étape de déplacement du capot (50) de la position fermée à la position ouverte et une étape de déplacement de la bielle (55) de la position de vol à la position de maintenance.

## Patentansprüche

1. Gondel (2) für eine Antriebseinheit (1) eines Luftfahrzeugs, umfassend mindestens eine zwischen einer geschlossenen Position und einer offenen Position bewegliche Abdeckung (50), derart, dass sie mindestens eine verschiebbare Stange (55) umfasst, die konfiguriert ist, um Folgendes zu erfüllen:
- eine erste Funktion zur strukturellen Verstärkung, wenn sie in einer Flugposition platziert ist, wobei die Stange (55) in Flugposition konfiguriert ist, um Kräfte zwischen einer ersten Komponente (10, 12) der Gondel (2) und einer zweiten Komponente (33, 20, 21, 22) der Gondel (2), oder die durch einen anderen Teil des Luftfahrzeugs gebildet wird, zu übertragen, und
- eine zweite Funktion zum Halten, wenn sie in einer Wartungsposition platziert ist, wobei die Stange in Wartungsposition imstande ist, die Abdeckung (50) in offener Position zu halten,
und derart, dass die Abdeckung (50) Verbindungsmittel (64, 65, 67, 69) umfasst, die konfiguriert sind, um mit der Stange (55) in Wartungsposition zusammenzuwirken, wobei die Stange (55) in Flugposition von diesen Verbindungsmitteln (64, 65, 67, 69) getrennt ist.

2. Gondel (2) nach Anspruch 1, umfassend einen Lufteinlass (10), einen hinteren Abschnitt (12) zum Ausstoßen von Gas, und einen Halter (33), wobei der Halter (33) sich längs zwischen dem Lufteinlass (10) und dem hinteren Abschnitt (12) erstreckt, und den Lufteinlass (10) und/oder den hinteren Abschnitt (12) stützt, wobei der Halter (33) Befestigungsmittel (61, 63) umfasst, die konfiguriert sind, um mit der Stange (55) in Flugposition zusammenzuwirken, wobei die Stange (55) in Wartungsposition von diesen Befestigungsmitteln (61, 63) getrennt ist.

3. Gondel (2) nach einem der Ansprüche 1 oder 2, wobei die erste Komponente durch einen Lufteilass (10) oder durch einen hinteren Abschnitt (12) zum Ausstoßen von Gas der Gondel (2) gebildet wird.

4. Antriebseinheit (1) für ein Luftfahrzeug, umfassend ein Turbotriebwerk (3) und eine Gondel (2) nach einem der Ansprüche 1 bis 3.

5. Antriebseinheit (1) nach Anspruch 4, wobei die Stange (55) in Wartungsposition am Turbotriebwerk (3) fixiert ist.

6. Luftfahrzeug, umfassend eine Antriebseinheit (1) nach Anspruch 4 oder 5.

7. Luftfahrzeug nach Anspruch 6, umfassend ein Tragflächen- (20) oder Rumpf-(21) oder Leitwerkelement (22), das die zweite Komponente bildet.

8. Verfahren zur Inspektion und/oder Wartung einer Antriebseinheit (1) nach Anspruch 4 oder 5, umfassend einen Schritt zum Verschieben der Abdeckung (50) von der geschlossenen Position in die offene Position, und einen Schritt zum Verschieben der Stange (55) von der Flugposition in die Wartungsposition.

## Claims

1. A nacelle (2) for an aircraft propulsion unit (1), comprising at least one cowl (50) movable between a closed position and an open position, such that it comprises at least one movable connecting rod (55) configured to fill:
- a first structural reinforcement function when it is placed in a flight position, the connecting rod (55) in the flight position being configured to transmit forces between a first component (10, 12) of the nacelle (2) and a second component (33, 20, 21, 22) of the nacelle (2) or formed by another portion of the aircraft, and
- a second holding function when it is placed in a maintenance position, the connecting rod in the maintenance position being able to hold the cowl (50) in the open position
and such that the cowl (50) comprises connecting means (64, 65, 67, 69) configured to cooperate with the connecting rod (55) in the maintenance position, the connecting rod (55) in the flight position being detached from these connecting means (64, 65, 67, 69).

2. The nacelle (2) according to claim 1, comprising an air inlet (10), a gas ejection rear section (12) and a cradle (33), the cradle (33) extending longitudinally between the air inlet (10) and the rear section (12) and supporting the air inlet (10) and/or the rear section (12), the cradle (33) comprising attachment means (61, 63) configured to cooperate with the connecting rod (55) in the flight position, the connecting rod (55) in the maintenance position being detached from these attachment means (61, 63).

3. The nacelle (2) according to any one of claims 1 or 2, wherein the first component is formed by an air inlet (10) or by a gas ejection rear section (12) of the nacelle (2).

4. A propulsion unit (1) for an aircraft, comprising a turbine engine (3) and a nacelle (2) according to any one of claims 1 to 3.

5. The propulsion unit (1) according to claim 4, wherein the connecting rod (55) in the maintenance position is fastened to the turbine engine (3).

6. An aircraft comprising a propulsion unit (1) according to claim 4 or 5.

7. The aircraft according to claim 6, comprising a wing (20) or fuselage (21) or empennage (22) element forming said second component.

8. A method for inspecting and/or maintaining a propulsion unit (1) according to claim 4 or 5, comprising a step of moving the cowl (50) from the closed position to the open position and a step of moving the connecting rod (55) from the flight position to the maintenance position.
